(19) Europäisches Patentamt
European Patent Office
Office européen des brevets

(11) **EP 4 610 900 A1**

(12) **EUROPEAN PATENT APPLICATION**

(43) Date of publication:
**03.09.2025   Bulletin 2025/36**

(21) Application number: **24305312.1**

(22) Date of filing: **28.02.2024**

(51) International Patent Classification (IPC):
***G06N 20/00*** (2019.01)

(52) Cooperative Patent Classification (CPC):
**G06N 20/00;** G06N 3/045; G06N 3/09; G06N 3/096;
G06N 3/098

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BULL SAS
78340 Les Clayes-Sous-Bois (FR)**

(72) Inventors:
• **RAMI, Hamza
91120 Palaiseau (FR)**
• **WINCKLER, Nicolas
38190 Villard Bonnot (FR)**
• **GIRALDO ZULUAGA, Jhony Heriberto
91300 Massy (FR)**
• **LATHUILIÈRE, Stéphane
91300 Massy (FR)**

(74) Representative: **IPAZ
Bâtiment Platon
Parc Les Algorithmes
91190 Saint-Aubin (FR)**

(54) **METHOD FOR PERFORMING PRIVACY-PRESERVING FEDERATED LEARNING IN THE FRAMEWORK OF RE-IDENTIFICATION**

(57)     The invention concerns a method comprising a computation loop including:
- a transmission step for:
• computing, by a central node (4), an output of a current aggregated model (32) for each image of a central dataset (10);
• transferring, to each of n local nodes (6):
◦ data representative of the aggregated model; and
◦ a set of prototypes;

- a training step including:
• for each local node (6), training a respective local computer vision model (12) to obtain a respective trained local model (34); and
• performing supervised training of the aggregated model, based on the central dataset (10), thereby obtaining a trained central model (36);

- an aggregation step including:
• for each local node, transferring, to the central node (4), corresponding local model data;
• updating the aggregated model based on:
◦ the local model data; and
◦ data representative of the trained central model (36).

Figure 1

Processed by Luminess, 75001 PARIS (FR)

EP 4 610 900 A1

**Description**

**Field of the invention**

The present invention relates to a computer-implemented method for performing privacy-preserving federated learning in the framework of re-identification.

The invention further relates to a computer program and a framework.

The invention applies to the field of computer science, and more specifically to artificial intelligence for image processing.

**Background**

Re-identification (also referred to as "Re-ID") is a crucial task in computer vision, aimed at identifying specific individuals from a collection of images acquired through various cameras.

The ability to perform Re-ID, and more specifically person Re-ID, in an accurate and efficient manner is essential for advancing intelligent surveillance systems and enhancing public safety.

Recent years have witnessed remarkable progress in Re-ID performance, thanks to the adoption of deep learning techniques. However, applying these approaches to data that is visually different from their training set results in a performance drop. Furthermore, annotating new data for each distinct environment is often infeasible.

This has prompted the introduction of Unsupervised Domain Adaptation (UDA) methods for person Re-ID.

UDA methods are known to combine an annotated dataset, corresponding to a source domain, with an unlabeled dataset, corresponding to a target domain. The objective of UDA methods is to train a model that can perform effectively in a new target environment.

However, such methods are not entirely satisfactory.

Indeed, applying UDA to person Re-ID encounters privacy concerns due to the need to collect and store images of individuals in public areas. Yet, rigorous privacy regulations in many countries prohibit technology providers from retaining images of people. As a result, the majority of UDA methods are impractical for person Re-ID

A purpose of the present invention is to overcome at least one of these drawbacks.

Another purpose of the invention is to provide a method that allows to align the distributions of different local nodes (regarded as remote clients) with a source domain in a privacy-preserving manner, *i.e.*, without sharing images at any point.

**Summary of the invention**

To this end, the present invention concerns method of the aforementioned type, the method comprising iteratively performing a computation loop including:

- a transmission step comprising:

  • based on a labeled central dataset including a set of images, each image being associated with a label indicative, for each subject shown on said image, of an identity of said subject, computing, by a central node, for each identity, and for each associated image, a corresponding output of a current aggregated model using said image as input;
  • transferring, from the central node to each of n local nodes, n being an integer greater than or equal to 1, each local node being distinct from the central node:

    ◦ aggregated model data representative of the aggregated model; and
    ◦ for each identity, an associated prototype depending on the corresponding computed outputs of the aggregated model;

- a training step including:

  • for each local node, a local training phase comprising training a respective local computer vision model based on:

    ◦ a respective unlabeled local dataset stored in said local node and including a set of images previously acquired with at least one respective camera; and
    ◦ the received aggregated model data and prototypes, thereby obtaining a respective trained local model; and

  • a central training phase comprising performing supervised training of the aggregated model, at the central node, based on the central dataset, thereby obtaining a trained central model;

- an aggregation step including:

  • for each local node, transferring, from said local node to the central node, local model data representative of the respective trained local model;
  • updating the aggregated model based on:

      ○ the local model data; and
      ○ central model data representative of the trained central model; and

  • storing, in the central node, the updated aggregated model as the current aggregated model.

Indeed, thanks to the use of the prototypes, privacy-preserving constraints are not breached. Consequently, alignment between the source domain and each target domain can be performed, and each local model can be trained, without actually exchanging images.

According to other advantageous aspects of the invention, the method includes one or several of the following features, taken alone or in any technically possible combination:

the method further comprises, prior to performing the computation loop, an initialization step including:

- performing supervised training of a central computer vision model, based on the central dataset; and
- storing, in the central node, a result of the supervised training of the central computer vision model as the current aggregated model;

the aggregated model, the trained central model, and each trained local model have the same architecture, and wherein:

- the aggregated model data are coefficient values of the aggregated model;
- for each local node, the corresponding local model data are coefficient values of the respective trained local model; and
- the central model data are coefficient values of the trained central model;

updating the aggregated model includes computing the coefficient values of the aggregated model as a linear combination of the local model data and the central model data, preferably as a weighted average sum calculated as:

$$\boldsymbol{\theta} = \alpha\boldsymbol{\theta}_s + (1-\alpha)\sum_{i=1}^{n} w_i \boldsymbol{\theta}_i$$

where:

- $\theta$ is a vector of the coefficient values of the aggregated model;
- $\alpha$ is a predetermined weight contribution of the trained central model;
- $\theta_s$ is a vector of the coefficient values of the trained central model;
- $\theta_i$ is a vector of the coefficient values of the i-th trained local model; and
- $w_i$ is a weight assigned to i-th local node, preferably computed as:

$$w_i = \left. N_i \middle/ \sum_{i=1}^{n} N_i \right. ;$$

  and
- $N_i$ is the number of images in the local dataset stored in the i-th local node;

for each identity, the respective prototype is an average of the outputs of the aggregated model using, as input, the images of the central dataset associated with said identity, each prototype being preferably calculated as:

$$p_k = \frac{1}{|S_k|} \sum_{l \in S_k} F_\theta(x_l^S), \quad \forall 1 \le k \le K$$

where:

- $p_k$ is the prototype associated with identity k;
- $S_k$ is a subset of the central dataset including the images associated with identity k;
- $|S_k|$ is the number of images in the subset $S_k$;
- $F_\theta$ is the aggregated model;
- $x_l^S$ is the l-th image of the subset $S_k$; and
- K is the number of identities associated with the central dataset;

the method further comprises, for each local dataset, implementing a clustering algorithm on the images of said local dataset to determine, for each image of said local dataset, a pseudo-label indicative, for each subject shown on said image, of an identity of said subject, and for each local node, the local training phase comprising:

- initializing a teacher model and a student model with the received aggregated model data;
- iteratively performing, at said local node, a local training loop including:

  • selecting a subset of the respective local dataset to form a current local subset;
  • modifying the student model to minimize a local loss function depending on:

    ◦ an output of the current teacher model for each image of the local subset;
    ◦ an output of the current student model for each image of the local subset;
    ◦ a subset of the received prototypes, forming a prototype subset and having the same size as the local subset;

  • storing the modified student model as the current student model;
  • updating the teacher model based on the current student model;
  • storing the updated teacher model as the current teacher model;

- assigning the current teacher model as the trained local model;

the local loss function is computed based on a pseudo-label loss function for each image of the current local subset and on a maximum mean discrepancy loss between the current local subset and the current prototype subset, preferably computed as:

$$\mathcal{L}_i = \frac{1}{m} \sum_{j \in D_{i,m}} \mathcal{L}_p\left(x_j^{(i)}\right) + \lambda \mathcal{L}_M(D_{i,m}, P_m)$$

where:

- $\mathcal{L}_i$ is the local loss function;
- m is the size of the local subset;
- $D_{i,m}$ is the current local subset;
- $\mathcal{L}_p\left(x_j^{(i)}\right)$ is the pseudo-label loss function for the j-th image of the local subset $D_{i,m}$;
- $\lambda$ is a predetermined weighting factor;
- $P_m$ is the current prototype subset; and
- $\mathcal{L}_M(D_{i,m}, P_m)$ is the maximum mean discrepancy loss between the local subset $D_{i,m}$ and the current prototype subset $P_m$;

the pseudo-label loss for the j-th image of the local subset $D_{i,m}$ is computed as:

$$\mathcal{L}_p\left(x_j^{(i)}\right) = \mathcal{L}_{C,i}\left(x_j^{(i)}\right) + \mathcal{L}_{T,i}\left(x_j^{(i)}\right)$$

where:

- $\mathcal{L}_{C,i}\left(x_j^{(i)}\right)$ is a cross-entropy loss term; and

- $\mathcal{L}_{T,i}\left(x_j^{(I)}\right)$ is a triplet loss term,

the cross-entropy loss term $\mathcal{L}_{C,i}\left(x_j^{(i)}\right)$ being preferably calculated as:

$$\mathcal{L}_{C,i}\left(x_j^{(i)}\right) = \beta_1 \mathcal{L}_C\left(C_i \circ F_{\theta_i}\left(x_j^{(i)}\right), \tilde{y}_j^{(i)}\right) + \beta_2 \mathcal{L}_C\left(C_i \circ F_{\theta_i}\left(x_j^{(i)}\right), \overline{C_i} \circ F_{\overline{\theta}_i}\left(x_j^{(i)}\right)\right)$$

and/or the triplet loss term $\mathcal{L}_{T,i}\left(x_j^{(i)}\right)$ being preferably calculated as:

$$\mathcal{L}_{T,i}\left(x_j^{(i)}\right) = \gamma_1 \mathcal{L}_T\left(F_{\theta_i}\left(x_j^{(i)}\right), \tilde{y}_j^{(i)}\right) + \gamma_2 \mathcal{L}_T\left(F_{\theta_i}\left(x_j^{(i)}\right), F_{\overline{\theta}_i}\left(x_j^{(i)}\right)\right)$$

where:

- $x_j^{(i)}$ is j-th image of the local subset $D_{i,m}$;
- $\mathcal{L}_C$ is a cross-entropy loss;
- $\mathcal{L}_T$ is a triplet loss;
- $C_i$ is a student classifier head for local node i;
- $\overline{C}_i$ is a teacher classifier head for local node i;
- $\beta_1 + \beta_2 = 1$
- $\gamma_1 + \gamma_2 = 1$
- $x_j^{(i)}$ is the j-th image of the local subset $D_{i,m}$;
- $\tilde{y}_j^{(i)}$ is the pseudo-label associated with image $x_j^{(i)}$;
- $F_{\theta_i}$ is the student model; and
- $F_{\overline{\theta}_i}$ is the teacher model;

the central training phase comprising:

- initializing a teacher model and a student model with the current aggregated model;
- iteratively performing, at the central node, a central training loop including:

  • selecting a subset of the central dataset to form a current central subset;
  • modifying the student model to minimize a source loss function depending on:

    ◦ an output of the current teacher model for each image of the current central subset; and
    ◦ an output of the current student model for each image of the current central subset;

- storing the modified student model as the current student model;
- updating the teacher model based on the current student model;
- storing the updated teacher model as the current teacher model;

- assigning the current teacher model as the trained central model;

the source loss function is computed as:

$$\mathcal{L} = \frac{1}{m} \sum_{j \in D_{i,m}} \mathcal{L}_S\left(x_j^S, y_j^S\right)$$

where:

- $\mathcal{L}$ is the source loss function;
- m is the size of the central subset;
- $D_{S,m}$ is the current central subset;
- $\mathcal{L}_S\left(x_j^S, y_j^S\right)$ is a central model loss function for the j-th image of the central subset $D_{S,m}$;
- $x_j^S$ is the j-th image of the central subset $D_{S,m}$; and
- $y_j^S$ is the label associated with image $x_j^S$ ;

the central model loss function is computed as:

$$\mathcal{L}_S\left(x_j^S, y_j^S\right) = \mathcal{L}_{C,S}\left(x_j^S, y_j^S\right) + \mathcal{L}_{T,S}\left(x_j^S, y_j^S\right)$$

where:

- $\mathcal{L}_{C,S}\left(x_j^S, y_j^S\right)$ is a cross-entropy loss term; and
- $\mathcal{L}_{T,S}\left(x_j^S, y_j^S\right)$ is a triplet loss term,

the cross-entropy loss term $\mathcal{L}_{C,S}\left(x_j^S, y_j^S\right)$ being preferably calculated as:

$$\mathcal{L}_{C,S}\left(x_j^S, y_j^S\right) = \delta_1 \mathcal{L}_C\left(C_S \circ F_{\theta_S}(x_j^S),\ y_j^S\right) + \delta_2 \mathcal{L}_C\left(C_S \circ F_{\theta_S}(x_j^S),\ \overline{C}_S \circ F_{\overline{\theta}_S}(x_j^S)\right)$$

and/or the triplet loss term $\mathcal{L}_{T,S}\left(x_j^S, y_j^S\right)$ being preferably calculated as:

$$\mathcal{L}_{T,S}\left(x_j^S, y_j^S\right) = \mu_1 \mathcal{L}_T\left(F_{\theta_i}(x_j^S),\ y_j^S\right) + \mu_2 \mathcal{L}_T\left(F_{\theta_i}(x_j^S),\ F_{\overline{\theta}_i}(x_j^S)\right)$$

where:

- $\mathcal{L}_C$ is a cross-entropy loss;

- $\mathcal{L}_T$ is a triplet loss;
- Cs is a student classifier head for the central node;
- $\overline{C}_S$ is a teacher classifier head for the central node;
- $F_{\theta_S}$ is the student model;
- $F_{\overline{\theta}_S}$ is the teacher model;

$$\delta_1 + \delta_2 = 1;$$

and

$$\mu_1 + \mu_2 = 1;$$

for each local node, each corresponding local subset includes the images of the respective local dataset associated with a predetermined number of identities, and
for each local node, and for each local training phase, the local training loop being performed a number of times calculated as:

$$P_i = \frac{K_i}{I}$$

where:

- Pi is the number of iterations of the local training loop;
- Ki is the number of identities associated with the respective local dataset Di; and
- I is the predetermined number of identities associated with each local subset $D_{i,m}$;

and/or

each central subset includes the images of the central dataset associated with a predetermined number of identities, and
for each central training phase, the central training loop being performed a number of times calculated as:

$$P_S = \frac{K_S}{J}$$

where:

- Ps is the number of iterations of the central training loop;
- Ks is the number of identities associated with the central dataset; and
- J is the predetermined number of identities associated with each central subset;

for each local node, and for each iteration of the local training loop, the updated teacher model is a linear combination of the current teacher model and the current student model,
preferably calculated using exponential moving averaging according to:

$$\overline{\theta}_i^{(t+1)} = \tau\overline{\theta}_i^{(t)} + (1-\tau)\theta_i$$

where:

- $\overline{\theta}_i^{(t+1)}$ is a vector of the coefficient values of the updated teacher model of the i-th local node;

- $\overline{\theta}_i^{(t)}$ is a vector of the coefficient values of the current teacher model of the i-th local node;

- $\theta_i$ is a vector of the coefficient values of the current student model of the i-th local node; and
- $\tau$ is a predetermined weighting factor comprised in an interval ranging from 0 to 1;

and/or

for each iteration of the central training loop, the updated teacher model is a linear combination of the current teacher model and the current student model,
preferably calculated using exponential moving averaging according to:

$$\overline{\boldsymbol{\theta}}_S^{(t+1)} = \rho\overline{\boldsymbol{\theta}}_S^{(t)} + (1-\rho)\boldsymbol{\theta}_S$$

where:

- $\overline{\boldsymbol{\theta}}_S^{(t+1)}$ is a vector of the coefficient values of the updated teacher model;
- $\overline{\boldsymbol{\theta}}_S^{(t)}$ is a vector of the coefficient values of the current teacher model;
- $\theta_S$ is a vector of the coefficient values of the current student model; and
- $\rho$ is a predetermined weighting factor comprised in an interval ranging from 0 to 1.

According to another aspect of the same invention, it is proposed a computer program comprising instructions, which when executed by a computer, cause the computer to carry out the steps of the method as defined above.

The computer program may be in any programming language such as C, C++, JAVA, Python, etc.

The computer program may be in machine language.

The computer program may be stored, in a non-transient memory, such as a USB stick, a flash memory, a hard-disc, a processor, a programmable electronic chop, etc.

The computer program may be stored in a computerized device such as a smartphone, a tablet, a computer, a server, etc.

According to another aspect of the same invention, it is proposed a framework for performing privacy-preserving federated learning for re-identification, the framework comprising a central node and n local nodes, n being an integer greater than or equal to 1, each local node being distinct from the central node,

the central node being configured to store a labeled central dataset including a set of images, each image being associated with a label indicative, for each subject shown on said image, of an identity of said subject,
each local node being configured to store a respective unlabeled local dataset stored in said local node and including a set of images previously acquired with at least one respective camera,
the framework being configured to iteratively perform a computation loop including:

- a transmission step wherein:

  • the central node computes, based on the central dataset, for each identity, and for each associated image, a corresponding output of a current aggregated model using said image as input;
  • the central node transfers to each local node:

    ◦ aggregated model data representative of the aggregated model ; and
    ◦ for each identity, an associated prototype depending on the corresponding computed outputs of the aggregated model;

- a training step wherein:

  • each local node performs a local training phase comprising training a respective local computer vision model based on:

    ◦ the respective unlabeled local dataset; and
    ◦ the received aggregated model data and prototypes, thereby obtaining a respective trained local model; and

- the central node performs a central training phase comprising performing supervised training of the aggregated model based on the central dataset, thereby obtaining a trained central model;

  - an aggregation step wherein:

    - each local node transfers, to the central node, local model data representative of the respective trained local model;
    - the central node updates the aggregated model based on:

      ○ the local model data; and
      ○ central model data representative of the trained central model; and

    - the central node stores the updated aggregated model as the current aggregated model.

The framework may include personal devices such as a smartphone, a tablet, a smartwatch, a computer, any wearable electronic device, etc.

The framework according to the invention may execute one or several applications to carry out the method according to the invention.

The framework according to the invention may be loaded with, and configured to execute, the computer program according to the invention.

## Brief description of the drawings

Other advantages and characteristics will become apparent on examination of the detailed description of an embodiment which is in no way limitative, and the attached figures, where:

Figure 1 is a schematic representation of a framework according to the invention;

Figure 2 is a flowchart of a method implemented by the framework of figure 1.

It is well understood that the embodiments that will be described below are in no way limitative. In particular, it is possible to imagine variants of the invention comprising only a selection of the characteristics described hereinafter, in isolation from the other characteristics described, if this selection of characteristics is sufficient to confer a technical advantage or to differentiate the invention with respect to the state of the prior art. Such a selection comprises at least one, preferably functional, characteristic without structural details, or with only a part of the structural details if this part alone is sufficient to confer a technical advantage or to differentiate the invention with respect to the prior art.

In the figures, elements common to several figures retain the same reference.

## Detailed description

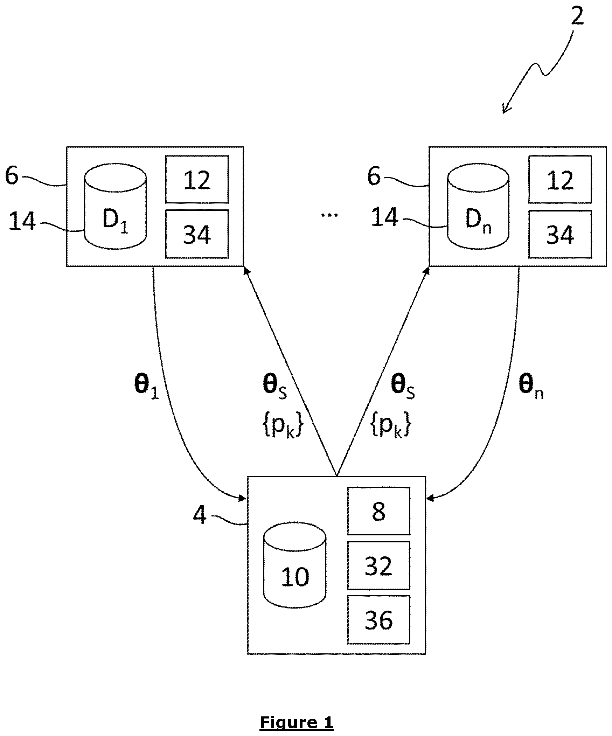

A framework 2 according to the invention is shown on figure 1.

The framework 2 is designed to perform privacy-preserving federated learning for re-identification, and more specifically for person re-identification.

The framework 2 includes a central node 4 and n local nodes 6, n being an integer greater than or equal to 1. Each local node 6 is distinct from the central node 4.

The central node 4 is configured to store an artificial intelligence model 8 (referred to as "central model"). More specifically, the artificial intelligence model 8 is a computer vision model, preferably a re-identification model.

The central node 4 is also configured to store a central dataset 10.

The central dataset 10 is suitable for the training of an artificial intelligence model, and more specifically a computer vision model, such as the central model 8. More precisely, the central dataset 10 is a labelled (i.e., annotated) dataset including a set S of Ns samples. Each sample comprises an image and, for each subject shown on said image, a corresponding label indicative of an identity of said subject.

The central dataset 10 is associated with a source domain which represents a known environment.

Preferably, each image of the central dataset 10 is associated with a single identity. In other words, for two identities i and j, $S_i \cap S_j = \emptyset$, $\forall i \neq j$, where $S_i$ (respectively $S_j$) is the subset of the central dataset 10 formed by the images associated with identity i (respectively with identity j).

Alternatively, the central dataset 10 is stored in a data storing unit (not shown) of the framework 2, distinct from the central node 4 and the local nodes 8. In this case, the data storing unit is configured so that the central dataset 10 can be accessed and read by the central node 4.

Advantageously, the central dataset 10 only includes synthetic data and/or real data gathered in compliance with relevant legislation.

Each local node 6 is configured to store an artificial intelligence model 12 (referred to as "local model"). More specifically, each artificial intelligence model 12 is a computer vision model, such as a re-identification model.

Preferably, each local model 12 has the same architecture as the central model 8.

Furthermore, each local node 6 is configured to store a respective local dataset 14. More precisely, for each local node 6, the corresponding local dataset 14 is an unlabeled dataset including a set of images, for instance a set of images previously acquired using at least one respective camera.

Each local dataset 14 is associated with a target domain that represents an unknown environment which may be different from the source domain.

Advantageously, the framework 2 is configured so that each local dataset 14 is a private dataset that can only be read by the respective local node 6. This feature is advantageous, as it prevents data leakage, thereby enhancing privacy.

The remaining features of the framework 2 will be better understood through the description of the operation of the framework 2, provided below with reference to the figures.

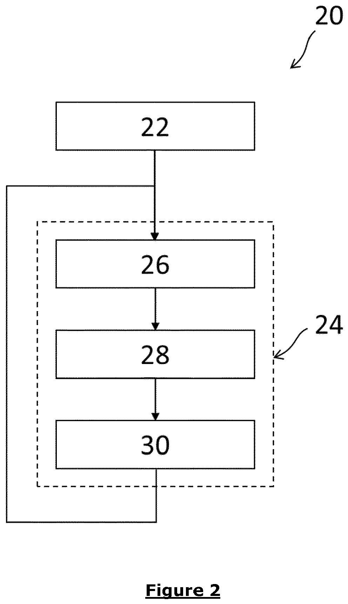

The framework 2 is configured to perform a method 20, shown on figure 2.

The method 20 comprises iteratively performing a computation loop 24 including a transmission step 26, a training step 28 and an aggregation step 30.

Preferably, the method 20 also comprises an optional initialization step 22 prior to the execution of the computation loop 24.

**Initialization step 22**

During the initialization step 22, supervised training of the central model 8 is performed based on the central dataset 10.

For instance, said supervised training of the central model 8 is performed by the central node 4.

Moreover, a result of the supervised training of the central model 8 is stored, in the central node 4, as a current aggregated model 32.

Consequently, the aggregated model 32 has the same architecture as the central model 8.

**Computation loop 24**

Then, the computation loop 24 is iteratively performed.

For instance, the computation loop 24 is performed until a predetermined stopping criterion is reached. The stopping criterion may be reached when a predetermined number of iterations of the computation loop 24 is performed, or when a relative change in performance between the results of two consecutive iterations of the computation loop 24 is lower than a predetermined minimal relative change.

*Transmission step 26*

More precisely, during the transmission step 26, for each identity associated with the central dataset 10, the central node 4 applies the current aggregated model 32 to the images of the central dataset 10 that are associated with said identity. In other words, for each identity, and for each image associated with said identity, the central node 4 computes a corresponding output of the aggregated model 32 using said image as input.

Then, for each identity associated with the central dataset 10, the central node 4 computes an associated prototype depending on the corresponding computed outputs of the aggregated model 32.

Resorting to such prototypes is advantageous. Indeed, with enough diverse identities and images per identity in the local dataset 10, the set of prototypes can serve as an approximation of the source domain distribution which can be transmitted with little cost to the local nodes 6. As will be shown below, said prototypes are used to align target domain distributions with the source domain distribution in each local node, during the training step 28.

Preferably, for each identity, the central node 4 computes the respective prototype as an average of the respective outputs of the aggregated model 32.

For instance, the central node 4 is configured to compute each prototype as:

$$p_k = \frac{1}{|S_k|} \sum_{l \in S_k} F_\theta(x_l^S), \ \forall 1 \le k \le K$$

where:

- $p_k$ is the prototype associated with identity k;

- $S_k$ is a subset of the central dataset 10 including the images associated with identity k;
- $|S_k|$ is the number of images in the subset $S_k$;
- $F_\theta$ is the aggregated model 32;
- $x_l^S$ is the I-th image of the subset $S_k$; and
- K is the number of identities associated with the central dataset 10.

Consequently, for each identity, the associated prototype $p_k$ is the centroid of the corresponding feature representation.

Moreover, for each identity k associated with the central dataset 10, the central node 4 transfers, to each local node 6, the associated prototype $p_k$.

In the case where the images of the central dataset 10 have been gathered in compliance with relevant legislation, the transmission of the prototypes from the central node 4 to the local nodes 6 does not breach the privacy-preserving constraints, which is advantageous.

Furthermore, during the transmission step 26, the central node 4 also transfers, to each local node 6, aggregated model data representative of the current aggregated model 32.

Preferably, the aggregated model data are coefficient values of the aggregated model 32, designated by refence "$\theta_S$" in figure 1.

*Training step 28*

Then, during the training step 28, each local node 6 performs a respective local training phase.

Furthermore, during the training step 28, the central node 4 performs a respective central training phase.

*Local training phase*

More precisely, during the local training phase, each local node 6 trains the respective local model 12 based on:

- the respective local dataset 14 stored thereon; and
- the received aggregated model data $\theta_S$ and prototypes $\{p_k\}$.

As a result, a respective trained local model 34 is obtained.

Preferably, during the local training phase, each local node 6 initializes the local model 12 using the aggregated model data $\theta_S$ received from the central node 4.

Preferably, the aggregated model 32 and each local model 12 have the same architecture (which is especially the case if each local model 12 has the same architecture as the central model 8). In this case, each local node 6 initializes the corresponding local model 12 by replacing the value of each coefficient of said local model 12 with the value of the corresponding coefficient of the aggregated model 32 included in the received aggregated model data $\theta_S$.

Then, each local node 6 preferably performs clustering on the images of the respective local dataset 14 to determine, for each image of said local dataset 14, a pseudo-label indicative, for each subject shown on said image, of an identity of said subject.

More precisely, each local node 6 applies the current local model 12 to the images of the respective local dataset 14, then implements a clustering algorithm on the resulting outputs to identify a certain number of clusters that are each assigned to a corresponding class.

In this case, each class is preferably used as a pseudo-label. More precisely, for any given identified cluster j, the corresponding class $\tilde{y}_j^{(i)}$ is used as a pseudo-label for each image $x_j^{(i)}$ belonging to said cluster j.

For instance, the clustering algorithm is DBSCAN (« Density-Based Spatial Clustering of Applications with Noise »).

Then, each local node 6 creates a teacher model and a student model based on the resulting local model.

For instance, each of the teacher model and the student model is a copy of the current local model.

Moreover, during the local training phase, each local node 6 iteratively performs a local training loop.

During each iteration of the local training loop, the local node 6 first selects a subset of the respective local dataset 14 to form a current local subset (also designated as $D_{i,m}$).

Advantageously, for each local node 6, each selected local subset includes the images of the respective local dataset 14 associated with a predetermined number I of identities. This feature is advantageous, as it allows to set a number of iterations of the local training loop, as detailed below.

Then, the local node 6 modifies the student model to minimize a local loss function which depends on:

- an output of the current teacher model for each image of the current local subset;
- an output of the current student model for each image of the current local subset; and
- a current subset of the received prototypes, forming a prototype subset and having the same size as the current local subset.

Resorting to a loss function that depends on the received prototypes is advantageous, as it allows to align the target domain distribution (i.e., the distribution of the feature representations of the target domain, computed by the student model) with the source domain distribution (i.e., the distribution of the feature representations of the source domain, that is, of the prototypes).

Preferably, the local node 6 computes the local loss function based on a pseudo-label loss function for each image of the local subset $D_{i,m}$, and on a maximum mean discrepancy loss (or "MMD loss") between the local subset $D_{i,m}$ and the current prototype subset $P_m$.

More precisely, the local node 6 may compute the local loss function as:

$$\mathcal{L}_i = \frac{1}{m} \sum_{j \in D_{i,m}} \mathcal{L}_p\left(x_j^{(i)}\right) + \lambda \mathcal{L}_M\left(D_{i,m}, P_m\right)$$

where:

- $\mathcal{L}_i$ is the local loss function;
- m is the size of the local subset;
- $D_{i,m}$ is the current local subset;

- $\mathcal{L}_p\left(x_j^{(i)}\right)$ is the pseudo-label loss function for the j-th image of the local subset $D_{i,m}$;

- $\lambda$ is a predetermined weighting factor;
- $P_m$ is the current prototype subset; and

- $\mathcal{L}_M\left(D_{i,m}, P_m\right)$ is the maximum mean discrepancy loss between the local subset $D_{i,m}$ and the current prototype subset $P_m$.

Using the MMD loss has many advantages. Indeed, it is flexible, as it allows to choose any kernel function to project the data in the corresponding reproducing kernel Hilbert space (or "RKHS space"). It is also effectively used in high dimensional settings (especially when working with images). Furthermore, the MMD loss has been shown to be useful when used as a loss function for domain adaptation tasks.

The MMD loss can be understood as a distance between two distributions. In particular, if p and q are two distributions then we should have MMD(p,q) = 0 if and only if p=q.

Preferably, considering the j-th image of the local subset $D_{i,m}$, the local node 6 computes the corresponding pseudo-label loss as:

$$\mathcal{L}_p\left(x_j^{(i)}\right) = \mathcal{L}_{C,i}\left(x_j^{(i)}\right) + \mathcal{L}_{T,i}\left(x_j^{(i)}\right)$$

where:

- $\mathcal{L}_{C,i}\left(x_j^{(i)}\right)$ is a cross-entropy loss term; and

- $\mathcal{L}_{T,i}\left(x_j^{(i)}\right)$ is a triplet loss term.

Preferably, the cross-entropy loss term $\mathcal{L}_{C,i}\left(x_j^{(i)}\right)$ is calculated as:

$$\mathcal{L}_{C,i}\left(x_j^{(i)}\right) = \beta_1 \mathcal{L}_C\left(C_i \circ F_{\theta_i}\left(x_j^{(i)}\right), \tilde{y}_j^{(i)}\right) + \beta_2 \mathcal{L}_C\left(C_i \circ F_{\theta_i}\left(x_j^{(i)}\right), \bar{C}_i \circ F_{\bar{\theta}_i}\left(x_j^{(i)}\right)\right)$$

Preferably, the triplet loss term $\mathcal{L}_{T,i}\left(x_j^{(i)}\right)$ is calculated as:

$$\mathcal{L}_{T,i}\left(x_j^{(i)}\right) = \gamma_1 \mathcal{L}_T\left(F_{\theta_i}\left(x_j^{(i)}\right), \tilde{y}_j^{(i)}\right) + \gamma_2 \mathcal{L}_T\left(F_{\theta_i}\left(x_j^{(i)}\right), F_{\bar{\theta}_i}\left(x_j^{(i)}\right)\right)$$

More precisely:

- $x_j^{(i)}$ is j-th image of the local subset $D_{i,m}$;

- $\mathcal{L}_C$ is a cross-entropy loss;

- $\mathcal{L}_T$ is a triplet loss;
- $C_i$ is a student classifier head for local node i;
- $\bar{C}_i$ is a teacher classifier head for local node i;
- $\beta_1 + \beta_2 = 1$
- $\gamma_1 + \gamma_2 = 1$

- $x_j^{(i)}$ is the j-th image of the local subset $D_{i,m}$;

- $\tilde{y}_j^{(i)}$ is the pseudo-label associated with image $x_j^{(i)}$;
- $F_{\theta_i}$ is the student model; and
- $F_{\bar{\theta}_i}$ is the teacher model.

Using the cross-entropy loss and the triplet loss is advantageous, as they are particularly well suited for reidentification models.

Each classifier head is designed to match the number of classes of the teacher model and the student model to the respective number of identities determined for each local dataset 14.

Then, the local node 6 stores the modified student model as the current student model, and updates the teacher model based on the current student model.

Preferably, for each iteration of the local training loop, the updated teacher model is a linear combination of the current teacher model and the current student model.

For instance, for each iteration of the local training loop, a given local node 6 calculates the updated teacher model using exponential moving averaging according to:

$$\bar{\theta}_i^{(t+1)} = \tau \bar{\theta}_i^{(t)} + (1-\tau)\theta_i$$

where:

- $\bar{\theta}_i^{(t+1)}$ is a vector of the coefficient values of the updated teacher model of the i-th local node 6;

- $\bar{\theta}_i^{(t)}$ is a vector of the coefficient values of the current teacher model of the i-th local node;
- $\theta_i$ is a vector of the coefficient values of the current student model of the i-th local node; and
- $\tau$ is a predetermined weighting factor comprised in an interval ranging from 0 to 1.

Then, the local node 6 stores the updated teacher model as the current teacher model, used for the next iteration of the local training loop.

As mentioned previously, for each local node 6, each corresponding local subset advantageously includes the images of the respective local dataset associated with the predetermined number I of identities. In this case, for each local node 6, the local training loop is performed a number of times Pi calculated as:

$$P_i = \frac{K_i}{I}$$

where:

- Pi is the number of iterations of the local training loop;
- Ki is the number of identities associated with the respective local dataset 14; and
- I is the predetermined number of identities associated with each local subset $D_{i,m}$.

This feature is advantageous, as it helps preventing over-fitting in local nodes 6 having local datasets 14 with only a few identities or images. Consequently, the number of iterations Pi ensures equal usage of all identities within a local node 6 during a given iteration of the computation loop 22, regardless of the variation in the number of identities across the local datasets 14.

Then, after the local training phase has been completed for the current iteration of the computation loop 22, the local node 6 stores the current teacher model as the aforementioned trained local model 34.

*Central training phase*

Advantageously, during the training step 28, the central node 4 performs a central training phase similar to the local training phase, to obtain a trained central model 36. This feature is advantageous, as it facilitates more efficient model aggregation.

More precisely, during the central training phase, the central node 4 performs supervised training based on the current aggregated model 32, using the central dataset 10 stored thereon. As a result, the trained central model 36 is obtained.

More precisely, the central node 4 first creates a teacher model and a student model based on the current aggregated model 32. For instance, each of the teacher model and the student model is a copy of the current aggregated model 32.

Furthermore, during the central training phase, the central node 4 iteratively performs a central training loop.

During each iteration of the central training loop, the central node 4 first selects a subset of the central dataset 10 to form a current central subset (also designated as $D_{S,m}$).

Advantageously, each selected central subset includes the images of the central dataset 10 that are associated with a predetermined number of identities J.

Then, the central node 4 modifies the student model to minimize a source loss function which depends on:

- an output of the current teacher model for each image of the current central subset; and
- an output of the current student model for each image of the current central subset.

Preferably, the central node 4 computes the source loss function as:

$$\mathcal{L} = \frac{1}{m} \sum_{j \in D_{i,m}} \mathcal{L}_S \left( x_j^S, y_j^S \right)$$

where:

- $\mathcal{L}$ is the source loss function;
- m is the size of the central subset;
- $D_{S,m}$ is the current central subset;
- $\mathcal{L}_S \left( x_j^S, y_j^S \right)$ is a central model loss function for the j-th image of the central subset $D_{S,m}$;
- $x_j^S$ is the j-th image of the central subset $D_{S,m}$; and

- y^ is the label associated with image $x_j^S$ .

Preferably, considering the j-th image of the central subset, the central node 4 computes the central model loss function as:

$$\mathcal{L}_S\left(x_j^S, y_j^S\right) = \mathcal{L}_{C,S}\left(x_j^S, y_j^S\right) + \mathcal{L}_{T,S}\left(x_j^S, y_j^S\right)$$

where:

- $\mathcal{L}_{C,S}\left(x_j^S, y_j^S\right)$ is a cross-entropy loss term; and

- $\mathcal{L}_{T,S}\left(x_j^S, y_j^S\right)$ is a triplet loss term.

Preferably, the cross-entropy loss term $\mathcal{L}_{C,S}\left(x_j^S, y_j^S\right)$ is calculated as:

$$\mathcal{L}_{C,S}\left(x_j^S, y_j^S\right) = \delta_1 \mathcal{L}_C\left(C_S \circ F_{\theta_S}(x_j^S),\ y_j^S\right) + \delta_2 \mathcal{L}_C\left(C_S \circ F_{\theta_S}(x_j^S),\ \bar{C}_S \circ F_{\bar{\theta}_S}(x_j^S)\right)$$

Preferably, the triplet loss term $\mathcal{L}_{T,S}\left(x_j^S, y_j^S\right)$ is calculated as:

$$\mathcal{L}_{T,S}\left(x_j^S, y_j^S\right) = \mu_1 \mathcal{L}_T\left(F_{\theta_i}(x_j^S),\ y_j^S\right) + \mu_2 \mathcal{L}_T\left(F_{\theta_i}(x_j^S),\ F_{\bar{\theta}_i}(x_j^S)\right)$$

More precisely:

- $\mathcal{L}_C$ is the cross-entropy loss;

- $\mathcal{L}_T$ is the triplet loss;
- $C_S$ is a student classifier head for the central node;
- $\bar{C}_S$ is a teacher classifier head for the central node;
- $F_{\theta_S}$ is the student model;
- $F_{\bar{\theta}_S}$ is the teacher model;

$$\delta_1 + \delta_2 = 1;$$

and

$$\mu_1 + \mu_2 = 1.$$

Each classifier head is designed to match the number of classes of the teacher model and the student model to the number of identities associated with the central dataset 10.
Then, the central node 4 stores the modified student model as the current student model, and updates the teacher model based on the current student model.
Preferably, for each iteration of the central training loop, the updated teacher model is a linear combination of the current teacher model and the current student model.
For instance, for each iteration of the central training loop, the central node 4 calculates the updated teacher model using exponential moving averaging according to:

$$\overline{\boldsymbol{\theta}}_S^{(t+1)} = \rho \overline{\boldsymbol{\theta}}_S^{(t)} + (1-\rho)\boldsymbol{\theta}_S$$

where:

- $\overline{\boldsymbol{\theta}}_S^{(t+1)}$ is a vector of the coefficient values of the updated teacher model;
- $\overline{\boldsymbol{\theta}}_S^{(t)}$ is a vector of the coefficient values of the current teacher model;
- $\theta_S$ is a vector of the coefficient values of the current student model; and
- $\rho$ is a predetermined weighting factor comprised in an interval ranging from 0 to 1.

Then, the central node 4 stores the updated teacher model as the current teacher model, used for the next iteration of the central training loop.

Preferably, the central training loop is performed a number of times Ps calculated as:

$$P_S = \frac{K_S}{J}$$

where:

- Ps is the number of iterations of the central training loop;
- Ks is the number of identities associated with the central dataset 10; and
- J is the predetermined number of identities associated with each central subset $D_{S,m}$.

Then, after the central training phase has been completed for the current iteration of the computation loop 22, the central node 4 stores the current teacher model as the trained central model 36.

*Aggregation step 30*

Then, during the aggregation step 30, each local node 6 transfers, to the central node 4, local model data $\theta_i$ representative of the respective trained local model.

Preferably, for each local node 6, the corresponding local model data $\theta_i$ are coefficient values of the respective trained local model 34.

Then, the central node 4 updates the aggregated model 32 based on:

- the local model data $\theta_i$ received from each local node 6; and
- central model data representative of the trained central model 36.

Preferably, the central model data are coefficient values of the trained central model.

Preferably, to update the aggregated model 32, the central node 4 computes the coefficient values of the aggregated model 32 as a linear combination of the local model data and the central model data.

For instance, the central node 4 computes the coefficient values of the aggregated model as a weighted average sum given by:

$$\boldsymbol{\theta} = \alpha \boldsymbol{\theta}_s + (1-\alpha)\sum_{i=1}^{n} w_i \boldsymbol{\theta}_i$$

where:

- $\theta$ is a vector of the coefficient values of the aggregated model;
- $\alpha$ is a predetermined weight contribution of the trained central model;
- $\theta_s$ is a vector of the coefficient values of the trained central model;
- $\theta_i$ is a vector of the coefficient values of the i-th trained local model; and
- wi is a weight assigned to i-th local node 6; and

- Ni is the number of images in the local dataset stored in the i-th local node.

Preferably, the weight wi assigned to i-th local node is computed as:

$$w_i = \frac{N_i}{\sum_{i=1}^{n} N_i}$$

As a result, an updated aggregated model, forming the current aggregated model 32, is obtained.
As mentioned previously, the computation loop 24 is iteratively performed until the predetermined stopping criterion is reached. At this stage, each local model 34 is considered as trained, and domain alignment between the source domain and each target domain is considered as performed.
Of course, the invention is not limited to the examples detailed above.

**Claims**

1. A computer-implemented method for performing privacy-preserving federated learning in the framework of re-identification, the method comprising iteratively performing a computation loop including:

    - a transmission step comprising:

        • based on a labeled central dataset (10) including a set of images, each image being associated with a label indicative, for each subject shown on said image, of an identity of said subject, computing, by a central node (4), for each identity, and for each associated image, a corresponding output of a current aggregated model (32) using said image as input;
        • transferring, from the central (4) node to each of n local nodes (6), n being an integer greater than or equal to 1, each local node being distinct from the central node:

            ◦ aggregated model data representative of the aggregated model; and
            ◦ for each identity, an associated prototype depending on the corresponding computed outputs of the aggregated model (32);

    - a training step including:

        • for each local node (6), a local training phase comprising training a respective local computer vision model (12) based on:

            ◦ a respective unlabeled local dataset (14) stored in said local node and including a set of images previously acquired with at least one respective camera; and
            ◦ the received aggregated model data and prototypes, thereby obtaining a respective trained local model (34); and

        • a central training phase comprising performing supervised training of the aggregated model, at the central node (4), based on the central dataset (10), thereby obtaining a trained central model (36);

    - an aggregation step including:

        • for each local node, transferring, from said local node (6) to the central node (4), local model data representative of the respective trained local model (34);
        • updating the aggregated model based on:

            ◦ the local model data; and
            ◦ central model data representative of the trained central model (36); and

        • storing, in the central node (4), the updated aggregated model as the current aggregated model (32).

2. The method according to claim 1, further comprising, prior to performing the computation loop, an initialization step including:

- performing supervised training of a central computer vision model, based on the central dataset; and
- storing, in the central node, a result of the supervised training of the central computer vision model as the current aggregated model.

3. The method according to claim 1 or 2, wherein the aggregated model, the trained central model, and each trained local model have the same architecture, and wherein:

- the aggregated model data are coefficient values of the aggregated model;
- for each local node, the corresponding local model data are coefficient values of the respective trained local model; and
- the central model data are coefficient values of the trained central model.

4. The method according to claim 3, wherein updating the aggregated model includes computing the coefficient values of the aggregated model as a linear combination of the local model data and the central model data, preferably as a weighted average sum calculated as:

$$\boldsymbol{\theta} = \alpha\boldsymbol{\theta}_s + (1-\alpha)\sum_{i=1}^{n} w_i\boldsymbol{\theta}_i$$

where:

- $\theta$ is a vector of the coefficient values of the aggregated model;
- $\alpha$ is a predetermined weight contribution of the trained central model;
- $\theta_s$ is a vector of the coefficient values of the trained central model;
- $\theta_i$ is a vector of the coefficient values of the i-th trained local model; and
- $w_i$ is a weight assigned to i-th local node, preferably computed as:

$$w_i = \left. N_i \middle/ \sum_{i=1}^{n} N_i \right. ;$$

and
- Ni is the number of images in the local dataset stored in the i-th local node.

5. The method according to any one of claims 1 to 4, wherein, for each identity, the respective prototype is an average of the outputs of the aggregated model using, as input, the images of the central dataset associated with said identity, each prototype being preferably calculated as:

$$p_k = \frac{1}{|S_k|}\sum_{l\in S_k} F_\theta(x_l^S), \ \forall 1\le k\le K$$

where:

- $p_k$ is the prototype associated with identity k;
- $S_k$ is a subset of the central dataset including the images associated with identity k;
- $|S_k|$ is the number of images in the subset $S_k$;
- $F_\theta$ is the aggregated model;
- $x_l^S$ is the l-th image of the subset $S_k$; and
- K is the number of identities associated with the central dataset.

6. The method according to any one of claims 1 to 5, further comprising, for each local dataset, implementing a clustering algorithm on the images of said local dataset to determine, for each image of said local dataset, a pseudo-label indicative, for each subject shown on said image, of an identity of said subject, and
for each local node, the local training phase comprising:

- initializing a teacher model and a student model with the received aggregated model data;
- iteratively performing, at said local node, a local training loop including:

  • selecting a subset of the respective local dataset to form a current local subset;
  • modifying the student model to minimize a local loss function depending on:

    ∘ an output of the current teacher model for each image of the local subset;
    ∘ an output of the current student model for each image of the local subset;
    ∘ a subset of the received prototypes, forming a prototype subset and having the same size as the local subset;

  • storing the modified student model as the current student model;
  • updating the teacher model based on the current student model;
  • storing the updated teacher model as the current teacher model;

- assigning the current teacher model as the trained local model.

**7.** The method according to claim 6, wherein the local loss function is computed based on a pseudo-label loss function for each image of the current local subset and on a maximum mean discrepancy loss between the current local subset and the current prototype subset,
preferably computed as:

$$\mathcal{L}_i = \frac{1}{m} \sum_{j \in D_{i,m}} \mathcal{L}_p\left(x_j^{(i)}\right) + \lambda \mathcal{L}_M\left(D_{i,m}, P_m\right)$$

where:

- $\mathcal{L}_i$ is the local loss function;
- m is the size of the local subset;
- $D_{i,m}$ is the current local subset;

- $\mathcal{L}_p\left(x_j^{(i)}\right)$ is the pseudo-label loss function for the j-th image of the local subset $D_{i,m}$;
- $\lambda$ is a predetermined weighting factor;
- $P_m$ is the current prototype subset; and

- $\mathcal{L}_M\left(D_{i,m}, P_m\right)$ is the maximum mean discrepancy loss between the local subset $D_{i,m}$ and the current prototype subset $P_m$.

**8.** The method according to claim 7, wherein the pseudo-label loss for the j-th image of the local subset $D_{i,m}$ is computed as:

$$\mathcal{L}_p\left(x_j^{(i)}\right) = \mathcal{L}_{C,i}\left(x_j^{(i)}\right) + \mathcal{L}_{T,i}\left(x_j^{(i)}\right)$$

where:

- $\mathcal{L}_{C,i}\left(x_j^{(i)}\right)$ is a cross-entropy loss term; and

- $\mathcal{L}_{T,i}\left(x_j^{(l)}\right)$ is a triplet loss term,

the cross-entropy loss term $\mathcal{L}_{C,i}\left(x_j^{(i)}\right)$ being preferably calculated as:

$$\mathcal{L}_{C,i}\left(x_j^{(i)}\right) = \beta_1 \mathcal{L}_C\left(C_i \circ F_{\theta_i}\left(x_j^{(i)}\right), \tilde{y}_j^{(i)}\right) + \beta_2 \mathcal{L}_C\left(C_i \circ F_{\theta_i}\left(x_j^{(i)}\right), \overline{C_i} \circ F_{\overline{\theta}_i}\left(x_j^{(i)}\right)\right)$$

and/or the triplet loss term $\mathcal{L}_{T,i}\left(x_j^{(i)}\right)$ being preferably calculated as:

$$\mathcal{L}_{T,i}\left(x_j^{(i)}\right) = \gamma_1 \mathcal{L}_T\left(F_{\theta_i}\left(x_j^{(i)}\right), \tilde{y}_j^{(i)}\right) + \gamma_2 \mathcal{L}_T\left(F_{\theta_i}\left(x_j^{(i)}\right), F_{\overline{\theta}_i}\left(x_j^{(i)}\right)\right)$$

where:

- $x_j^{(i)}$ is j-th image of the local subset $D_{i,m}$;

- $\mathcal{L}_C$ is a cross-entropy loss;

- $\mathcal{L}_T$ is a triplet loss;
- $C_i$ is a student classifier head for local node i;
- $\overline{C}_i$ is a teacher classifier head for local node i;
-

$$\beta_1 + \beta_2 = 1$$

-

$$\gamma_1 + \gamma_2 = 1$$

- $x_j^{(i)}$ is the j-th image of the local subset $D_{i,m}$;

- $\tilde{y}_j^{(i)}$ is the pseudo-label associated with image $x_j^{(i)}$ ;
- $F_{\theta_i}$ is the student model; and
- $F_{\overline{\theta}_i}$ is the teacher model.

9. The method according to any one of claims 1 to 8, wherein the central training phase comprising:

   - initializing a teacher model and a student model with the current aggregated model;
   - iteratively performing, at the central node, a central training loop including:

     • selecting a subset of the central dataset to form a current central subset;
     • modifying the student model to minimize a source loss function depending on:

       ◦ an output of the current teacher model for each image of the current central subset; and
       ◦ an output of the current student model for each image of the current central subset;

     • storing the modified student model as the current student model;
     • updating the teacher model based on the current student model;
     • storing the updated teacher model as the current teacher model;

   - assigning the current teacher model as the trained central model.

**10.** The method according to claim 9, wherein the source loss function is computed as:

$$\mathcal{L} = \frac{1}{m} \sum_{j \in D_{i,m}} \mathcal{L}_S\left(x_j^S, y_j^S\right)$$

where:

- $\mathcal{L}$ is the source loss function;
- m is the size of the central subset;
- $D_{S,m}$ is the current central subset;

- $\mathcal{L}_S\left(x_j^S, y_j^S\right)$ is a central model loss function for the j-th image of the central subset $D_{S,m}$;

- $x_j^S$ is the j-th image of the central subset $D_{S,m}$; and

- y^ is the label associated with image $x_j^S$.

**11.** The method according to claim 10, wherein the central model loss function is computed as:

$$\mathcal{L}_S\left(x_j^S, y_j^S\right) = \mathcal{L}_{C,S}\left(x_j^S, y_j^S\right) + \mathcal{L}_{T,S}\left(x_j^S, y_j^S\right)$$

where:

- $\mathcal{L}_{C,S}\left(x_j^S, y_j^S\right)$ is a cross-entropy loss term; and

- $\mathcal{L}_{T,S}\left(x_j^S, y_j^S\right)$ is a triplet loss term,

the cross-entropy loss term $\mathcal{L}_{C,S}\left(x_j^S, y_j^S\right)$ being preferably calculated as:

$$\mathcal{L}_{C,S}\left(x_j^S, y_j^S\right) = \delta_1 \mathcal{L}_C\left(C_S \circ F_{\theta_S}(x_j^S),\ y_j^S\right) + \delta_2 \mathcal{L}_C\left(C_S \circ F_{\theta_S}(x_j^S),\ \bar{C}_S \circ F_{\bar{\theta}_S}(x_j^S)\right)$$

and/or the triplet loss term $\mathcal{L}_{T,S}\left(x_j^S, y_j^S\right)$ being preferably calculated as:

$$\mathcal{L}_{T,S}\left(x_j^S, y_j^S\right) = \mu_1 \mathcal{L}_T\left(F_{\theta_i}(x_j^S),\ y_j^S\right) + \mu_2 \mathcal{L}_T\left(F_{\theta_i}(x_j^S),\ F_{\bar{\theta}_i}(x_j^S)\right)$$

where:

- $\mathcal{L}_C$ is a cross-entropy loss;

- $\mathcal{L}_T$ is a triplet loss;
- $C_S$ is a student classifier head for the central node;
- $\bar{C}_S$ is a teacher classifier head for the central node;
- $F_{\theta_S}$ is the student model;
- $F_{\bar{\theta}_S}$ is the teacher model;

-

$$\delta_1 + \delta_2 = 1;$$

and

-

$$\mu_1 + \mu_2 = 1.$$

12. The method according to any one of claims 6 to 11, wherein, for each local node, each corresponding local subset includes the images of the respective local dataset associated with a predetermined number of identities, and for each local node, and for each local training phase, the local training loop being performed a number of times calculated as:

$$P_i = \frac{K_i}{I}$$

where:

- Pi is the number of iterations of the local training loop;
- Ki is the number of identities associated with the respective local dataset Di; and
- I is the predetermined number of identities associated with each local subset $D_{i,m}$;

and/or

each central subset includes the images of the central dataset associated with a predetermined number of identities, and
for each central training phase, the central training loop being performed a number of times calculated as:

$$P_S = \frac{K_S}{J}$$

where:

- Ps is the number of iterations of the central training loop;
- Ks is the number of identities associated with the central dataset; and
- J is the predetermined number of identities associated with each central subset.

13. The method according to any one of claims 6 to 12, wherein, for each local node, and for each iteration of the local training loop, the updated teacher model is a linear combination of the current teacher model and the current student model,
preferably calculated using exponential moving averaging according to:

$$\bar{\theta}_i^{(t+1)} = \tau \bar{\theta}_i^{(t)} + (1-\tau)\theta_i$$

where:

- $\bar{\theta}_i^{(t+1)}$ is a vector of the coefficient values of the updated teacher model of the i-th local node;

- $\bar{\theta}_i^{(t)}$ is a vector of the coefficient values of the current teacher model of the i-th local node;
- $\theta_i$ is a vector of the coefficient values of the current student model of the i-th local node; and
- $\tau$ is a predetermined weighting factor comprised in an interval ranging from 0 to 1;

and/or

for each iteration of the central training loop, the updated teacher model is a linear combination of the current teacher model and the current student model, preferably calculated using exponential moving averaging according to:

$$\overline{\boldsymbol{\theta}}_S^{(t+1)} = \rho\overline{\boldsymbol{\theta}}_S^{(t)} + (1-\rho)\boldsymbol{\theta}_S$$

where:

- $\overline{\boldsymbol{\theta}}_S^{(t+1)}$ is a vector of the coefficient values of the updated teacher model;

- $\overline{\boldsymbol{\theta}}_S^{(t)}$ is a vector of the coefficient values of the current teacher model;
- $\theta_S$ is a vector of the coefficient values of the current student model; and
- $\rho$ is a predetermined weighting factor comprised in an interval ranging from 0 to 1.

14. Computer program comprising instructions, which when executed by a computer, cause the computer to carry out the steps of the method according to any one of claims 1 to 13.

15. Framework (2) for performing privacy-preserving federated learning for re-identification, the framework (2) comprising a central node (4) and n local nodes (6), n being an integer greater than or equal to 1, each local node (6) being distinct from the central node (4),

the central node (4) being configured to store a labeled central dataset (10) including a set of images, each image being associated with a label indicative, for each subject shown on said image, of an identity of said subject, each local node (6) being configured to store a respective unlabeled local dataset (14) stored in said local node (6) and including a set of images previously acquired with at least one respective camera, the framework (2) being configured to iteratively perform a computation loop including:

- a transmission step wherein:

• the central node (4) computes, based on the central dataset (10), for each identity, and for each associated image, a corresponding output of a current aggregated model (32) using said image as input; • the central node (4) transfers to each local node (6):

○ aggregated model data ($\theta_S$) representative of the aggregated model (32); and ○ for each identity, an associated prototype ($p_k$) depending on the corresponding computed outputs of the aggregated model (32);

- a training step wherein:

• each local node (6) performs a local training phase comprising training a respective local computer vision model (12) based on:

○ the respective unlabeled local dataset (14); and ○ the received aggregated model data ($\theta_S$) and prototypes ($\{Pk\}$), thereby obtaining a respective trained local model (34); and

• the central node (4) performs a central training phase comprising performing supervised training of the aggregated model (32) based on the central dataset (10), thereby obtaining a trained central model (36);

- an aggregation step wherein:

• each local node (6) transfers, to the central node (4), local model data ($\theta_1$, $\theta_n$) representative of the respective trained local model (34);

- the central node (4) updates the aggregated model (32) based on:

  ○ the local model data $(\theta_1, \theta_n)$; and
  ○ central model data representative of the trained central model (36); and

- the central node (4) stores the updated aggregated model as the current aggregated model (32).

**Figure 1**

**Figure 2**

Europäisches
Patentamt

European
Patent Office

Office européen
des brevets

## EUROPEAN SEARCH REPORT

**Application Number**

EP 24 30 5312

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ZHUANG WEIMING ET AL: "Federated Unsupervised Domain Adaptation for Face Recognition", 2022 IEEE INTERNATIONAL CONFERENCE ON MULTIMEDIA AND EXPO (ICME), IEEE, 18 July 2022 (2022-07-18), pages 1-6, XP034176642, DOI: 10.1109/ICME52920.2022.9859587 [retrieved on 2022-08-26] | 1-5,14, 15 | INV. G06N20/00 |
| Y | * abstract * * page 1, left-hand column, line 1 - page 6, left-hand column, line 5 * | 6-13 | |
| Y | Hamza Rami ET AL: "Source-Guided Similarity Preservation for Online Person Re-Identification", arXiv.org, 23 February 2024 (2024-02-23), pages 1-10, XP093183979, DOI: 10.48550/arxiv.2402.15206 Retrieved from the Internet: URL:https://arxiv.org/pdf/2402.15206 [retrieved on 2024-07-11] | 6-13 | |
| A | * abstract * * page 1, left-hand column, line 1 - page 8, right-hand column, last line * | 1-5,14, 15 | |

**TECHNICAL FIELDS SEARCHED (IPC)**

G06N

The present search report has been drawn up for all claims

| Place of search | Date of completion of the search | Examiner |
|---|---|---|
| The Hague | 26 July 2024 | Totir, Felix |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)